# EUROPÄISCHE PATENTSCHRIFT

(11) **EP 2 795 749 B1**
(45) Veröffentlichungstag und Bekanntmachung des Hinweises auf die Patenterteilung: **28.03.2018**
(21) Anmeldenummer: 13707339.1
(22) Anmeldetag: 25.02.2013
(51) Int. Cl.: H02G 3/04, H02G 3/22

(54) **BRANDSCHUTZVORRICHTUNG**
FIRE PROTECTION DEVICE
DISPOSITIF DE PROTECTION CONTRE L'INCENDIE

(30) Priorität: 29.02.2012 DE 102012203146
(43) Veröffentlichungstag der Anmeldung: 29.10.2014
(73) Patentinhaber: Siemens Aktiengesellschaft, 80333 München (DE)
(72) Erfinder: DENGLER, Georg, 96114 Hirschaid (DE)
(86) Internationale Anmeldenummer: PCT/EP2013/053652
(87) Internationale Veröffentlichungsnummer: WO 2013/127714

(56) Entgegenhaltungen:
- EP-B1- 1 962 398
- DE-A1-102005 060 013
- GB-A- 2 147 155
- US-A1- 2002 032 996

## Beschreibung

Die Erfindung betrifft eine Brandschutzvorrichtung für eine Kabeldurchführung, die eine Kabeleinheit von einem brandgefährdeten Raum in einen gegen Brand zu schützenden Raum führt, mit einem Brandschutzmittel, welches zum Schutz gegen die Ausbreitung eines Brands in den zu schützenden Raum durch die Kabeldurchführung vorgesehen ist, wobei das Brandschutzmittel eine Baueinheit aus einem intumeszierenden Material und einen Grundkörper aufweist, an welchem die Baueinheit befestigt ist.

Bei der Ausbreitung eines Brands aus einem gefährdeten, mit elektrischen Geräten bestückten Raum, stellen Kabeldurchführungen, die Schnittstellen zwischen dem gefährdeten Raum und einem zu schützenden Raum bilden, ohne besondere Maßnahmen sicherheitskritische Schwachstellen dar. Ein Verbreiten des Feuers durch diese ungeschützten Stellen ist schwer zu vermeiden, da sie ohne Schutzmaßnahmen das Erfordernis einer vollständigen Abdichtung nicht erfüllen.

Es ist aus der EP 2 154 762 A2 eine Brandschutzvorrichtung in der Form einer speziellen, mit intumeszierenden Material befüllten Brandschutzkiste bekannt, die an einer Trennwand zwischen einem brandgefährdeten Raum und einem zu schützenden Raum angebracht ist. Diese als Komplettlösung ist für das Nachrüsten einer mit Standarddurchführungen versehenen Kabelschnittstelle unvorteilhaft, da diese komplett durch eine Brandschutzkiste zu ersetzen sind und die Trennwand angepasst werden muss.

Es ist ferner bereits vorgeschlagen worden, an eine bestehende Kabeleinheit ein branddämmendes Material anzubringen, welches um die Kabeleinheit herum im Bereich der Kabeldurchführung ausgegossen bzw. ausgeschäumt wird. Dies ermöglicht zwar das Nachrüsten einer bestehenden Kabeldurchführung, erschwert aber ein nachträgliches Einziehen von Kabelleitungen durch die Kabelführung.

Aus der EP 2 273 637 A2 ist außerdem eine Kabeldurchführung bekannt, die aus einem intumeszierenden Material besteht oder mit einem solchen Material beschichtet ist.

In der GB 2 147 155 oder der EP 1 962 398 B1 ist ferner ein Brandschutzmittel für eine Kabeldurchführung offenbart, welches einen Einsatz aus einem intumeszierenden Material, der auf ein durch die Kabeldurchführung geführtes Kabel aufgeschoben wird, und ein Kompressionselement aufweist, welches den Einsatz auf das Kabel presst.

Der Erfindung liegt die Aufgabe zugrunde, eine Brandschutzvorrichtung bereitzustellen, welche eine hohe Flexibilität in dem Einsatz von Kabeldurchführungen und bei einer nachträglichen Veränderung der Kabelverlegung bietet.

Hierzu wird vorgeschlagen, dass das Brandschutzmittel als Montagebauteil ausgebildet ist, welches bei der Montage mit der Kabeldurchführung gekoppelt wird. Durch die vorgeschlagene Ausführung des Brandschutzmittels kann eine besonders einfache Nachrüstung einer Kabelschnittstelle, die mit einer bestehenden Kabeldurchführung versehen ist, erreicht werden, wobei eine Anpassung der Kabeldurchführung für diesen Vorgang vorteilhafterweise nicht notwendig ist. Die vorgeschlagene Lösung bietet ferner den Vorteil, dass ein nachträgliches Arbeiten an der Kabeleinheit einfach erfolgen kann, da das Brandschutzmittel als Montagebauteil jederzeit bei Bedarf durch ein einfaches Abmontieren von der Kabelschnittstelle entfernt werden kann.

Unter einem "Montagebauteil" soll in diesem Zusammenhang insbesondere eine zumindest bezüglich ihrer Form und ihrer Dimension vorgefertigte Baueinheit verstanden werden, die durch Herstellung einer mechanischen Verbindung mit einem weiteren Bauteil montiert wird. Im Gegensatz zu einem Brandschutzmittel aus einem Gieß- und/oder Schaummaterial, welches seine Form erst beim Anbringen an die Kabeleinheit annimmt, ist die Form des Montagebauteils bei dessen Fertigung festgelegt oder - anders ausgedrückt - das Montieren bzw. Anbringen des Montagebauteils erfolgt ohne weitere intrinsische chemische oder physikalische Umwandlung. Hierdurch kann ein Montagebauteil vorteilhaft von der Umgebung der Kabeleinheit entfernt werden, ohne dass es dadurch zerstört wird. Dies ermöglicht eine Wiederverwendung des Brandschutzmittels nach der Anpassung einer Kabelverlegung. Das Brandschutzmittel als vorgefertigtes Montagebauteil weist den Grundkörper und die an ihm befestigte Baueinheit aus einem intumeszierenden Material auf, sodass es einfach - vorzugsweise in einem Montageschritt - an die Kabeldurchführung montiert bzw. mit dieser gekoppelt werden kann. Im Vergleich zu einer Lösung, bei welcher ein intumeszierender Einsatz an eine Kabeleinheit angebracht und anschließend mit Hilfe eines Befestigungselements fixiert wird, können die Anzahl von losen Teilen und der Montageaufwand reduziert werden. Außerdem ist für die Montage des vorgeschlagenen Brandschutzmittels das Vorhandensein einer Kabeleinheit nicht zwingend notwendig, sodass das Brandschutzmittel bzw. Montagebauteil mit der Kabeldurchführung gekoppelt werden kann, bevor Kabel durch die Kabeldurchführung geführt werden.

Das Brandschutzmittel ist im montierten Zustand vorteilhafterweise mit der Kabeldurchführung gekoppelt, wodurch ein vorteilhaftes Zusammenwirken des Brandschutzmittels und der Kabeldurchführung erreicht werden kann. Insbesondere können Lückenstellen zwischen dem Brandschutzmittel und der Kabeldurchführung weitestgehend vermieden werden, durch welche das Feuer ohne besonderen Schutz eindringen kann.

Unter einer "Kabeldurchführung" soll insbesondere ein Montagebauteil verstanden werden, das zumindest einen für die Führung der Kabeleinheit vorgesehenen Raum aufweist. Vorzugsweise bildet die Kabeldurchführung einen Kabelkanal für die Kabeleinheit, in welchem diese von der Kabeldurchführung senkrecht zur Verlaufrichtung der Kabeleinheit vorteilhaft vollständig umschlossen ist. Die Kabeldurchführung kann verschiedene Funktionen aufweisen und z.B. als Schottverschraubung, Kabelverschraubung oder Kabelschutzschlauchverschraubung ausgebildet sein. Vorzugweise ist die Kabeldurchführung an einer Trennvorrichtung angeordnet, die zumindest eine den zu schützenden Raum vom brandgefährdeten Raum trennende Fläche bildet. Insbesondere ist die Kabeldurchführung an der Trennvorrichtung befestigt. Die Kabeldurchführung ist vorzugsweise im Bereich einer aus der Trennvorrichtung ausgesparten Öffnung angeordnet und kann vorteilhaft in diese Öffnung hinein eindringen, wobei die Dimension der Kabeldurchführung und die Dimension der Öffnung vorteilhaft aufeinander abgestimmt sind. Die Kabeldurchführung befindet sich zweckmäßigerweise zumindest teilweise im zu schützenden Raum, wobei sich ein Endbereich der Kabeldurchführung im gefährdeten Raum befinden kann.

Das mit der Kabeldurchführung gekoppelte Brandschutzmittel kann im brandgefährdeten Raum oder im zu schützenden Raum angeordnet sein.

Die "Kabeleinheit" kann zumindest einen Kabel oder einen Kabelbündel aufweisen, wobei unter "Kabel" eine Einheit aus zumindest einem elektrischen Leiter und vorzugsweise einer diesen umschließenden Schutzmantelung verstanden werden soll. Bei einer Montage der Kabeleinheit wird diese zweckmäßigerweise durch die Kabeldurchführung durchgeführt, wodurch die Kabeleinheit im verlegten Zustand vorteilhaft durch die Kabeldurchführung ununterbrochen verläuft.

Unter einem "intumeszierenden" Material soll insbesondere ein Material verstanden werden, welches dazu vorgesehen ist, unter Hitzeeinwirkung an Volumen zuzunehmen und - z.B. durch Aufschäumen - eine Isolierungsschicht zu bilden, die den Sauerstoffzufuhr in den gefährdeten Raum verhindern kann.

Des Weiteren wird vorgeschlagen, dass das Brandschutzmittel im Zusammenwirken mit der Kabeldurchführung einen Kabelkanal für die Kabeleinheit bildet, wodurch ein besonders einfacher Kabelverlauf der Kabeleinheit im Bereich der Kabelschnittstelle erreicht werden kann. Das Verlegen der Kabeleinheit durch die Kabeldurchführung und das Brandschutzmittel kann hierbei mit einem geringen Aufwand erfolgen. Insbesondere kann die Kabeleinheit ununterbrochen durch die Kabeldurchführung und das Brandschutzmittel verlaufen. Besonders bevorzugt weist der durch die Kabeldurchführung und das Brandschutzmittel gebildete Kabelkanal eine einheitliche Erstreckungsrichtung auf, wodurch der Kabelkanal über dessen gesamte Erstreckung vorteilhaft eine gerade Ausrichtung aufweist.

Unter einem "Kabelkanal" soll in diesem Zusammenhang insbesondere eine Strecke verstanden werden, die für den Verlauf bzw. die Führung einer Kabeleinheit vorgesehen ist und sich insbesondere innerhalb einer die Strecke umfassenden Baueinheit erstreckt.

Es können ferner Feuereindringstellen zwischen der Kabeldurchführung und dem Brandschutzmittel besonders effizient vermieden werden, wenn - im gekoppelten Zustand des Brandschutzmittels an der Kabeldurchführung - sich das Brandschutzmittel und die Kabeldurchführung in einer Richtung überlappen, die senkrecht zur Verlaufrichtung der Kabeleinheit ausgerichtet ist. Sind das Brandschutzmittel und die Kabeldurchführung im montierten Zustand miteinander gekoppelt, kann in diesem Zusammenhang das Brandschutzmittel besonders einfach montiert werden, indem es direkt auf die Kabeldurchführung aufgesteckt bzw. verschaubt oder in die Kabeldurchführung eingesteckt bzw. eingeschraubt wird.

In einer alternativen Ausführung können das Brandschutzmittel und die Kabeldurchführung im montierten Zustand aneinander angeflanscht sein.

Ist die Kabeldurchführung an einer Trennvorrichtung befestigt, die den zu schützenden Raum vom brandgefährdeten Raum trennt, können Feuereindringstellen zwischen dem Brandschutzmittel und der Trennvorrichtung dadurch vorteilhaft vermieden werden, dass das Brandschutzmittel an der Trennvorrichtung anliegt.

Um das Eindringen des Feuers durch Zwischenräume, die in der Kabeleinheit gebildet sind, möglichst zu verhindern, wird in einer weiteren Ausführungsvariante der Erfindung vorgeschlagen, dass in einem eingebauten Zustand der Baueinheit die Kabeleinheit durch diese hindurch geführt ist. Die Baueinheit bildet hierbei vorteilhafterweise einen Kabelkanal, durch welchen die Kabeleinheit hindurch geführt wird. Vorzugsweise ist die Baueinheit ringförmig ausgeführt, wobei die Kabeleinheit in der Ringsradialrichtung vollständig von der Baueinheit umschlossen ist.

Es kann eine konstruktiv einfache und kompakte Ausführung des Brandschutzmittels erreicht werden, wenn der Grundkörper als hohler Körper ausgebildet ist, welcher einen für die Durchführung der Kabeleinheit vorgesehen Innenraum umfasst, in welchem die Baueinheit angeordnet ist. Durch die Anordnung der Baueinheit innerhalb des Grundkörpers kann das intumeszierende Material unter Hitzeinwirkung den Innenraum des Grundkörpers möglichst befüllen, wobei ein besonders hoher Schutz gegen eine Feuerausbreitung erreicht werden kann. Bildet das Brandschutzmittel im Zusammenwirken mit der Kabeldurchführung einen Kabelkanal für die Kabeleinheit, kann das intumeszierende Material in den von der Kabeldurchführung gebildeten Teil des Kabelkanals expandieren. Mit dieser Ausführung kann vorteilhaft ein hoher Schutz gegen die Ausbreitung eines Feuers in den zu schützenden Raum erreicht werden, insbesondere auch wenn das Brandschutzmittel im zu schützenden Raum angeordnet ist.

Eine konstruktiv einfache und Materialsparende Ausbildung des Brandschutzmittels kann außerdem erreicht werden, wenn das Brandschutzmittel ringförmig ausgebildet ist.

Eine besonders hohe Flexibilität im Einsatz des Brandschutzmittels kann ferner erreicht werden, wenn das Brandschutzmittel zumindest eine Koppelstelle aufweist, an welcher zumindest zwei Teilbereiche des Brandschutzmittels bei einer Montage desselben um die Kabeleinheit in deren verlegtem Zustand miteinander gekoppelt werden. Hierbei kann das Brandschutzmittel zumindest zwei Teilstücke aufweisen, die bei einer Montage um die Kabeleinheit miteinander befestigt werden. Alternativ kann das Brandschutzmittel aus einem flexiblen Material hergestellt sein, wobei vorteilhaft lediglich eine Koppelstelle notwendig ist.

Die Erfindung eignet sich insbesondere für einen Einsatz in Verbindung mit elektrischen Einrichtungen, die an Bord eines Fahrzeugs eingebaut sind. Die Räume, die insbesondere für den Aufenthalt von Fahrgästen oder des Fahrzeugsführers vorgesehen sind, müssen, im Hinblick auf deren beschränktes Volumen, gemäß besonders strengen Sicherheitsanforderungen gegen die Ausbreitung eines Brands geschützt sein. Dies gilt insbesondere für Schienenfahrzeuge, bei welchen ein sofortiger Halt nach Ausbrechen eines Feuers unter bestimmten Umständen - wie beim Befahren einer Tunnelstrecke - nicht zugelassen ist. Der Raum, der mittels der Brandschutzvorrichtung, die als Schienenfahrzeugsbrandschutzvorrichtung ausgebildet ist, zu schützen ist, entspricht einem Fahrgastraum und/oder einem Führerraum.

Es werden Ausführungsbeispiele der Erfindung anhand der Zeichnungen erläutert. Es zeigen:
- Figur 1:: eine Brandschutzvorrichtung für eine Kabelschnittstelle einer einen brandgefährdeten Raum von einem zu schützenden Raum trennenden Trennwand in einer Schnittansicht,
- Figur 2:: ein Brandschutzmittel der Brandschutzvorrichtung auf der brandgefährdeten Seite der Trennwand in einer perspektivischen Ansicht und
- Figur 3:: das Brandschutzmittel aus Figur 2 in einer alternativen Ausführung.

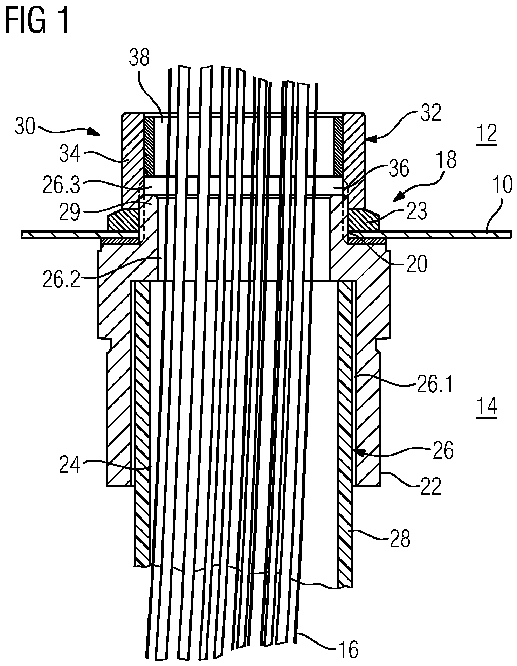

Figur 1 zeigt eine als Trennwand ausgebildete Trennvorrichtung 10 in einer Schnittansicht. Die Trennvorrichtung 10 ist dazu vorgesehen, einen brandgefährdeten Raum 12 (oben dargestellt) von einem gegen Brand zu schützenden Raum 14 (unten dargestellt) zu trennen. Im Raum 12 sind nicht dargestellte elektrische Geräte angeordnet, welche mittels einer Kabeleinheit 16 mit elektrischer Energie versorgt werden. Der Raum 12 kann beispielsweise dem Innenraum eines elektrischen Kastens oder einem Motorraum entsprechen, in welchem ein Feuer aufgrund eines Fehlbetriebs einer elektrischen Einrichtung potentiell ausgelöst werden kann. Die Trennvorrichtung 10 entspricht vorzugsweise einer Gehäusewand eines den Raum 12 umschließenden Gehäuses entsprechen.

Die Kabeleinheit 16, die im betrachteten Ausführungsbeispiel einem Kabelbündel entspricht, verläuft aus dem Raum 12 heraus durch eine Kabelschnittstelle 18 der Trennvorrichtung 10 in den Raum 14 hinein. Die Kabelschnittstelle 18 weist eine in der Trennvorrichtung 10 ausgesparte Öffnung 20 auf, durch welche die Kabeleinheit 16 in den Raum 14 geführt ist. Die Kabeleinheit 16 verläuft hierbei insbesondere ununterbrochen vom Raum 12 durch die Öffnung 20 in den Raum 14.

Die Kabelschnittstelle 18 weist ferner eine Kabeldurchführung 22 auf, die an der dem Raum 14 zugewandten Seite der Trennvorrichtung 10 angeordnet ist. Die Kabeldurchführung 22 entspricht einem Montagebauteil, das bei einer Montage an die Trennvorrichtung 10 angebracht wird und bei Bedarf von dieser zerstörungsfrei wieder trennbar ist.

Die Kabeldurchführung 22 ist an der Trennvorrichtung 10 mittels eines Befestigungsteils 23 befestigt, das an der dem gefährdeten Raum 12 zugewandten Seite der Trennvorrichtung 10 anliegt und insbesondere als ringförmige Sechskantmutter ausgebildet ist. Die Kabeldurchführung 22 ist in der Form einer Hülse ausgebildet, die einen Hohlraum 24 umschließt und einen Kabelkanal 26 für die Kabeleinheit 16 bildet.

Die Kabeleinheit 16 ist im Raum 14 mittels einer Kabelschutzvorrichtung 28 geschützt, die insbesondere als Kunststoffschlauch ausgebildet ist. Die Kabeldurchführung 22 ist als Kabelschutzschlauchverschraubung ausgebildet und hiermit für die Kopplung mit der Kabelschutzvorrichtung 28 angepasst, die in den Hohlraum 24 eingeführt wird.

Der Kabelkanal 26 weist einen ersten Teilbereich 26.1 auf, der für das Einführen der Kabelschutzvorrichtung 28 dient und sich von einem der Trennvorrichtung 10 abgewandten Ende der Kabeldurchführung 22 in Richtung der Trennvorrichtung 10 erstreckt. An den ersten Teilbereich 26.1 schließt sich ein zweiter Teilbereich 26.1 des Kabelkanals 26 an, der zur Führung der Kabeleinheit 16 durch die Öffnung 20 der Trennvorrichtung 10 dient. Der zweite Teilbereich 26.1 schließt sich ans Ende der Kabelschutzvorrichtung 28 an.

Die Kabeldurchführung 22 , insbesondere der zweite Teilbereich 26.1 des Kabelkanals 26, erstreckt sich durch die Öffnung 20 in den gefährdeten Raum 12 hinein, so dass ein Ende 29 der Kabeldurchführung und daher ein Teil des Kabelkanals 26 im Raum 12 angeordnet sind. Das Befestigungsteil 23 umgreift ringförmig das Ende 29 der Kabeldurchführung 22.

An der Kabelschnittstelle 18 ist ferner eine Brandschutzvorrichtung 30 mit einem Brandschutzmittel 32 angeordnet, das dazu vorgesehen ist, die Kabelschnittstelle 18 gegen die Ausbreitung eines im Raum 12 ausgelösten Brands in den zu schützenden Raum 14 zu schützen. Dieses ist als Montagebauteil ausgebildet, das im Bereich der Kabelschnittstelle 18 montiert wird und ggf. bei Bedarf von dieser wieder zerstörungsfrei getrennt werden kann. Bei der Montage wird das Brandschutzmittel 32 mit der Kabeldurchführung 22 gekoppelt, wobei es insbesondere am Ende 29 der Kabeldurchführung 22 befestigt wird. Insbesondere wird das Brandschutzmittel 32 direkt auf die Kabeldurchführung 22 aufgesteckt. Alternativ kann es mit der Kabeldurchführung 22 verschraubt werden.

Das Brandschutzmittel 32 ist im brandgefährdeten Raum 12 angeordnet, wobei es - wie oben bereits beschrieben - mit dem sich im Raum 12 befindenden Ende 29 der Kabeldurchführung 22 gekoppelt ist. Im Koppelbereich der Kabeldurchführung 22 und des Brandschutzmittels 32 überlappen sich das Ende 29 und das Brandschutzmittel 32 in einer Richtung senkrecht zur Haupterstreckungsrichtung des Kabelkanals 26 bzw. parallel zur Oberfläche der Trennvorrichtung 10 im Bereich der Kabelschnittstelle 18, d.h. senkrecht zur Verlaufrichtung der Kabeleinheit 16.

Das Brandschutzmittel 32 weist einen Grundkörper 34 auf, welcher als eine ringförmige Hülse ausgebildet ist. Der hohle Grundkörper 24 umfasst hierbei einen Innenraum 36, über welchen die Kabeleinheit 16 ausgehend vom Raum 12 in die Kabeldurchführung 22 geführt ist. Das Brandschutzmittel 32 bildet hiermit einen weiteren Teilbereich 26.3 des Kabelkanals 26, der sich an den Teilbereich 26.2 anschließt. Das Brandschutzmittel 32 und die Kabeldurchführung 22 bilden demnach im Zusammenwirken den durchgehenden Kabelkanal 26, mittel dessen die Kabeleinheit 16 vom Raum 12 in den Raum 14 geführt ist.

Ferner weist das Brandschutzmittel 32 eine Baueinheit 38 auf, die aus einem intumeszierenden Material hergestellt ist. Diese Baueinheit 38 ist ringförmig ausgebildet und umgibt die Kabeleinheit 16. Die Kabeleinheit 16 ist hierbei durch die Baueinheit 38 hindurch geführt. In der gezeigten Ausführung ist die Baueinheit 38 im Innenraum 36 des Grundkörpers 34 angeordnet und ist von diesem in Radialrichtung vollständig umschlossen. Die Baueinheit 38 entspricht daher einem Einsatz, welcher bei der Herstellung des Brandschutzmittels 32 in den Grundkörper 34 eingesetzt wird.

Die Kabeldurchführung 22 in der dargestellten Ausführung entspricht einem Bauteil, das standardgemäß in Kombination mit der Trennvorrichtung 10 verwendet wird. Im betrachteten Ausführungsbeispiel ist die Kabeldurchführung 22 als Kabelschutzschlauchverschraubung ausgebildet, wobei weitere Ausführungen, wie beispielsweise als Schottverschraubung, Kabelverschraubung usw. ebenfalls denkbar sind.

Durch das Brandschutzmittel 32 kann ein vorteilhafter Schutz der Kabelschnittstelle 18 erreicht werden, die mit einer bestehenden Kabeldurchführung 22 versehen ist, ohne das eine konstruktive Anpassung der Kabeldurchführung 22 notwendig ist. Mit der vorgeschlagenen Ausführung des Brandschutzmittels 32 kann die Kabeldurchführung 22 einfach nachgerüstet werden, indem das Brandschutzmittel 32 mit dieser gekoppelt wird. Im betrachteten Ausführungsbeispiel kann das Brandschutzmittel 32 einfach auf die bestehende Kabeldurchführung 22 aufgesteckt werden bzw. es kann auf diese aufgeschraubt werden.

Nach dem Anbringen des Brandschutzmittels 32 an die Kabeldurchführung 22 kann die Kabeleinheit 16 durch den gebildeten Kabelkanal 26 geführt werden.

Wird ein Brand im gefährdeten Raum 12 ausgelöst, erfolgt ein Aufschäumen der Baueinheit 38, wodurch ein Durchbrandwiderstand direkt im Kabelkanal 26 erzeugt wird. Eine Ausbreitung des Feuers durch den Kabelkanal 26 der Kabeldurchführung 22 kann hierdurch vermieden werden.

In der oben betrachteten Ausführung wurde angenommen, dass der Raum 12 einem brandgefährdeten Raum entspricht und der Raum 14 der zu schützende Raum ist, sodass sich das Brandschutzmittel 32 im gefährdeten Raum 12 befindet. Das Brandschutzmittel 32 kann auch dazu dienen, die Ausbreitung eines im Raum 14 ausgelösten Feuers in den Raum 12 zu verhindern. Dabei werden der Raum 14 als brandgefährdeten Raum und der Raum 12 als zu schützenden Raum betrachtet, wobei das Brandschutzmittel 32 im zu schützenden Raum 12 angeordnet ist.

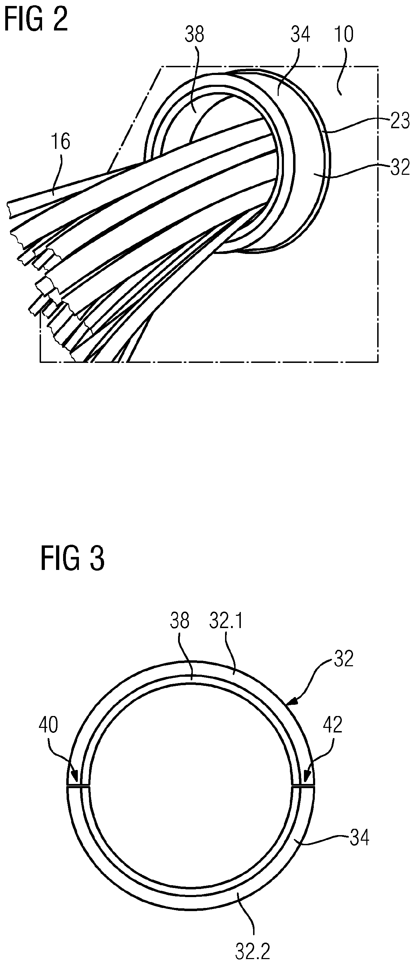

Figur 2 zeigt die Anordnung des Brandschutzmittels 32 an der Trennvorrichtung 10 in einer perspektivischen Ansicht. Im Innenraum 36 des Grundkörpers 34 ist die ringförmige Baueinheit 38 aus einem intumeszierenden Material als Einsatzstück angeordnet, die die Kabeleinheit 16 senkrecht zur Verlaufrichtung derselben vollständig umschließt.

In Figur 3 ist eine Variante des Brandschutzmittels 32 in einer Frontansicht dargestellt. In dieser Ausführung weist das Brandschutzmittel 32 zwei Teilbereiche 32.1 und 32.2 in Form von zwei Teilstücken auf, die bei einer Montage im Bereich der Trennvorrichtung 10 an Kopplungsstellen 40, 42 miteinander gekoppelt werden. Sie können miteinander mittels einer Klebe-, Löte-, Schraube- und/oder Flanschverbindung miteinander vereinigt werden. In dieser Ausführung ist ein einfaches Nachrüsten der Kabelschnittstelle 18 mit dem Brandschutzmittel 32 möglich, ohne dass die Kabeleinheit 16 entfernt werden muss.

## Patentansprüche

1. Brandschutzvorrichtung für eine Kabelschnittstelle (18) einer einen brandgefährdeten Raum (12) von einem gegen Brand zu schützenden Raum (14) trennenden Trennvorrichtung (10), wobei die Kabelschnittstelle (18) eine in der Trennvorrichtung (10) ausgesparte Öffnung (20) und eine Kabeldurchführung (22) aufweist, welche eine zumindest ein Kabelbündel aufweisende Kabeleinheit (16) vom brandgefährdeten Raum (12) in den gegen Brand zu schützenden Raum (14) führt, mit einem Brandschutzmittel (32), welches zum Schutz gegen die Ausbreitung eines Brands in den zu schützenden Raum (14) durch die Kabeldurchführung (22) vorgesehen ist, wobei das Brandschutzmittel (32) eine Baueinheit (38) aus einem intumeszierenden Material und einen Grundkörper (34) aufweist, an welchem die Baueinheit (38) befestigt ist,
**dadurch gekennzeichnet, dass**
das Brandschutzmittel (32) als Montagebauteil ausgebildet ist, welches im Bereich der Kabelschnittstelle (18) montierbar ist und bei der Montage mit der Kabeldurchführung (22) gekoppelt wird,
die Baueinheit (38) im Zusammenwirken mit der Kabeldurchführung (22) einen Kabelkanal (26) für die Kabeleinheit (16) bildet, und die Kabeleinheit (16) durch die Baueinheit (38) hindurch geführt wird.

2. Brandschutzvorrichtung nach einem der vorhergehenden Ansprüche,
**dadurch gekennzeichnet, dass**
im gekoppelten Zustand des Brandschutzmittels (32) an der Kabeldurchführung (22) sich das Brandschutzmittel (32) und die Kabeldurchführung (22) in einer Richtung überlappen, die senkrecht zur Verlaufrichtung der Kabeleinheit (16) ausgerichtet ist.

3. Brandschutzvorrichtung nach Anspruch 1,
**dadurch gekennzeichnet, dass**
der Grundkörper (34) als hohler Körper ausgebildet ist, welcher einen für die Durchführung der Kabeleinheit (16) vorgesehen Innenraum (36) umfasst, in welchem die Baueinheit (38) angeordnet ist.

4. Brandschutzvorrichtung nach einem der vorhergehenden Ansprüche,
**dadurch gekennzeichnet, dass**
das Brandschutzmittel (32) ringförmig ausgebildet ist.

5. Brandschutzvorrichtung nach einem der vorhergehenden Ansprüche,
**dadurch gekennzeichnet, dass**
das Brandschutzmittel (32) zumindest eine Koppelstelle (40, 42) aufweist, an welcher zumindest zwei Teilbereiche (32.1, 32.2) des Brandschutzmittels (32) bei einer Montage desselben um die Kabeleinheit (16) in deren verlegtem Zustand miteinander gekoppelt werden.

## Claims

1. Fire protection apparatus for a cable interface (18) of a separating apparatus (10) which separates a space (12) at risk of fire from a space (14) to be protected from fire, wherein the cable interface (18) has an opening (20) which has been cut out in the separating apparatus (10) and a cable bushing (22) leading a cable unit (16) which has at least one cable bundle from the space (12) at risk of fire to the space (14) to be protected against fire, having a fire protection means (32), which is provided for protecting against the spread of a fire into the space (14) to be protected through the cable bushing (22), wherein the fire protection means (32) has a structural unit (38) made of an intumescent material and a main body (34), to which the structural unit (38) is fastened,
**characterized in that**
the fire protection means (32) is in the form of an assembly component, which can be assembled in the region of the cable interface (18) and is coupled to the cable bushing (22) during assembly,
the structural unit (38) together with the cable bushing (22) forms a cable duct (26) for the cable unit (16), and the cable unit (16) is run through the structural unit (38) .

2. Fire protection apparatus according to the preceding claim,
**characterized in that**,
when the fire protection means (32) is coupled to the cable bushing (22), the fire protection means (32) and the cable bushing (22) overlap in a direction oriented perpendicular to the direction of extent of the cable unit (16) .

3. Fire protection apparatus according to Claim 1,
**characterized in that**
the main body (34) is in the form of a hollow body which comprises an inner space (36) which is provided for the passage of the cable unit (16) and in which is arranged the structural unit (38).

4. Fire protection apparatus according to one of the preceding claims,
**characterized in that**
the fire protection means (32) has an annular form.

5. Fire protection apparatus according to one of the preceding claims,
**characterized in that**
the fire protection means (32) has at least one coupling point (40, 42), at which at least two partial regions (32.1, 32.2) of the fire protection means (32) are coupled to one another, when the latter is assembled, around the cable unit (16) in the laid state thereof.

## Revendications

1. Dispositif de protection vis-à-vis de l'incendie pour une interface (18) de câble d'un dispositif (10) de séparation, séparant un espace (12) menacé par l'incendie d'un espace (14) à protéger de l'incendie, dans lequel l'interface (18) de câble a une ouverture (20) dans le dispositif (10) de séparation et une traversée (22) de câble, qui guide une unité (16) de câble, ayant au moins un faisceau de câble, de l'espace (12) menacé d'incendie à l'espace (14) à protéger de l'incendie, comprenant un moyen (32) de protection vis-à-vis de l'incendie, prévu pour se protéger de la propagation d'un incendie par la traversée (22) de câble dans l'espace (14) à protéger, le moyen (32) de protection vis-à-vis de l'incendie ayant une unité (38) de construction en un matériau intumescent et un corps (34) de base, auquel l'unité (38) de construction est fixée,
**caractérisé en ce que**
le moyen (32) de protection vis-à-vis de l'incendie est constitué sous la forme d'une pièce de montage, qui peut être montée dans la région de l'interface (18) de câble et adjointe à la traversée (22) de câble,
l'unité (38) de construction forme, en coopération avec la traversée (22) de câble, un canal (26) de câble pour l'unité (16) de câble et l'unité (16) de câble passe à travers l'unité (38) de construction.

2. Dispositif de protection vis-à-vis de l'incendie suivant l'une des revendications précédentes,
**caractérisé en ce que**
à l'état où le moyen (32) de protection vis-à-vis de l'incendie est adjoint à la traversée (22) de câble, le moyen (32) de protection vis-à-vis de l'incendie et la traversée (22) de câble se chevauchent dans une direction, qui est perpendiculaire à la direction dans laquelle s'étend l'unité (16) de câble.

3. Dispositif de protection vis-à-vis de l'incendie suivant la revendication 1,
**caractérisé en ce que**
le corps (34) de base est constitué en corps creux, qui comprend un espace (36) intérieure, qui est prévu pour le passage de l'unité (16) de câble et dans lequel est disposée l'unité (38) de construction.

4. Dispositif de protection vis-à-vis de l'incendie suivant l'une des revendications précédentes,
**caractérisé en ce que**
le moyen (32) de protection vis-à-vis de l'incendie est constitué sous la forme d'un anneau.

5. Dispositif de protection vis-à-vis de l'incendie suivant l'une des revendications précédentes,
**caractérisé en ce que**
le moyen (32) de protection vis-à-vis de l'incendie a au moins un point (40, 42) d'adjonction ou au moins deux sous-parties (32.1, 32.2) du moyen (32) de protection vis-à-vis de l'incendie qui sont, à son montage, autour de l'unité (16) de câble à son état posé, adjointes entre elles.
